# EUROPÄISCHE PATENTSCHRIFT

(11) **EP 1 152 917 B1**
(45) Veröffentlichungstag und Bekanntmachung des Hinweises auf die Patenterteilung: **28.01.2004**
(21) Anmeldenummer: 00912362.1
(22) Anmeldetag: 16.02.2000
(51) Int. Cl.: B60N 2/28, B64D 11/06

(54) **KINDERSITZ, INSBESONDERE ZUR MOBILEN VERWENDUNG IN EINEM FLUGZEUG**
CHILD'S SEAT, ESPECIALLY FOR MOBILE USE IN AN AIRCRAFT
SIEGE-ENFANT, NOTAMMENT POUR UTILISATION MOBILE DANS UN AVION

(30) Priorität: 17.02.1999 DE 19906547
(43) Veröffentlichungstag der Anmeldung: 14.11.2001
(73) Patentinhaber: Innovint Aircraft Interior GmbH, 22041 Hamburg (DE)
(72) Erfinder: GRÖNING, Manfred, D-22301 Hamburg (DE)
(74) Vertreter: Meyer, Ludgerus A., Dipl.-Ing.
(86) Internationale Anmeldenummer: PCT/DE2000/000401
(87) Internationale Veröffentlichungsnummer: WO 2000/048862

(56) Entgegenhaltungen:
- WO-A-93/14952
- DE-A- 3 911 264
- FR-A- 2 772 319
- US-A- 3 171 682
- US-A- 3 202 453
- US-A- 5 121 965
- US-A- 5 158 337
- US-A- 5 915 787

## Beschreibung

Die Erfindung betrifft einen Kindersitz, insbesondere zur mobilen Verwendung in einem Flugzeug, nach dem Oberbegriff des Anspruchs 1, wie z.B. in Dokument WO 93/14952 beschrieben.

Der Sicherheit von Kindern bei der Beförderung in Automobilen ist in den letzten Jahrzehnten große Aufmerksamkeit zuteil geworden. Entsprechende Gesetzesinitiativen haben dazu geführt, daß Kinder, insbesondere Kleinkinder, heute in Kindersitzen transportiert werden können, die das Verletzungsrisiko des Kindes bei einem Unfall erheblich reduzieren können.

In der Regel bleiben solche Kindersitze auf den Sitzen des Fahrzeuges befestigt. Kindersitze für Kleinkinder werden in den letzten Jahren auch häufig der Fahrtrichtung entgegengerichtet angeordnet, wobei sie auch auf dem Beifahrersitz befestigt werden können, so daß das Kind während der Fahrt vom Fahrer leicht beobachtet werden kann.

Bei der Beförderung von Kindern in Verkehrsflugzeugen sind dagegen spezielle Kindersitze die Ausnahme. Grundsätzlich ist es zwar möglich, auch Kindersitze aus Automobilen auf Fluggastsitzen zu befestigen, jedoch sind derartige Kindersitze in der Regel aus Dimensionsgründen und wegen ihres Gewichts für diesen Zweck nicht geeignet. Ferner erfüllen sie selten die Sicherheitsvorgaben der Flugsicherheitsinstitutionen.

Aus der EP 0 526 719 A1 ist eine Vorrichtung zur Ausbildung von Kindersitzen bekannt, bei der ein Kindersitz an der Rückseite einer Trennwand der Fluggastkabine befestigt ist. Der Nachteil eines solchen Systems liegt insbesondere darin, daß die Anordnung fest installiert ist und erheblichen Platz benötigt.

Aus dem DE-GM 92 02 597.8 ist ein zusammenklappbarer Kindersitz bekannt, der auf einem regulären Fluggastsitz mit den normalerweise vorhandenen Gurten befestigbar ist. Das Zusammenlegen des Kindersitzes erfolgt mit einem relativ komplexen Hebelgestänge. Ein solcher Kindersitz wird in Flugrichtung auf dem Fluggastsitz befestigt. Da es aus Sicherheitsgründen jedoch für Kleinkinder erwünscht ist, Kindersitze entgegen der Flugrichtung anzuordnen, ist der bekannte Kindersitz hierfür nicht geeignet.

Der Erfindung liegt die Aufgabe zugrunde, einen Kindersitz, insbesondere zur mobilen Verwendung in einem Flugzeug, anzugeben, der wahlweise gegen und in Flugrichtung auf einem Fluggastsitz befestigbar ist, der leicht zu einer kompakten Einheit zusammenklappbar ist, bei geringem Gewicht im Flugzeug leicht verstaut werden kann und für kleinere sowie größere Kinder geeignet ist.

Diese Aufgabe wird durch im Anspruch 1 angegebene Erfindung gelöst. Vorteilhafte Weiterbildungen der Erfindung sind in Unteransprüchen angegeben.

Ausgehend von einem Kindersitz mit einem auf einem Fahr- oder Fluggastsitz mittels Gurt befestigbaren Haltegestell, an dem eine Sitzschale und eine Rückenschale gelenkig befestigt sind und das Haltegestell eine Arretiervorrichtung zur Einstellung des Kindersitzes in eine bestimmte Sitzposition enthält, ist die Erfindung dadurch gekennzeichnet, daß die seitlichen unteren Enden der Rückenschale in seitlichen Führungen des Haltegestells verschieblich gelagert sind, daß die Rückenschale in einer aufgerichteten Position mit Hilfe der Arretiervorrichtung bezüglich des Haltegestells feststellbar ist, wobei nach Lösen der Arretierungsvorrichtung die Rückenschale in den Führungen des Haltegestells verschieblich ist, und daß die am unteren Ende der Rückenschale gelenkig befestigte Sitzschale gegen die Rückenschale klappbar ist.

Der erfindungsgemäße Kindersitz ist daher sowohl klappbar als auch in das Haltegestell einschiebbar. Dadurch ergibt sich nach dem Zusammenklappen eine sehr kompakte Einheit, die entsprechend platzsparend im Flugzeug untergebracht werden kann. Das Haltegestell bildet nicht nur die Basis für die Rücken- und Sitzschale, sondern auch die Grundstruktur des Kindersitzes, mit der der Sitz am Fluggastsitz befestigt wird. Daneben bildet das Haltegestell eine Abdeckung der Sitzpolster beim Verstauen des Sitzes.

Vorzugsweise ist das Haltegestell im Querschnitt U-förmig gestaltet und weist seitlich aufragende Schenkel auf, in denen die Führungen ausgebildet sind, in denen die Rückenschale verschieblich ist. Die Führungen sind insbesondere als spaltartige Ausnehmungen der seitlichen Schenkel des Haltegestells ausgebildet, die parallel zur Bodenfläche des Haltegestells verlaufen. Damit kann die Rückenschale nahezu vollständig in das Haltegestell eingeschoben werden, und nachdem die Sitzschale auf das Polster der Rückenschale aufgeklappt ist, ergibt sich die angegebene kompakte Einheit.

Um die Handhabung zu erleichtern, sind die unteren Enden der Rückenschale vorzugsweise durch eine Rollenlagerung in den spaltartigen Ausnehmungen des Haltegestells geführt.

In weiterer Ausgestaltung der Erfindung greift die Arretiervorrichtung in der Arretierstellung der Rückenschale in wenigstens einen der seitlichen Schenkel des Haltegestells ein, wobei die Eingreifposition der Arretiervorrichtung mit Abstand zur Stelle der Lagerung der Rückenschale im Haltegestell angeordnet ist.

Durch diese Maßnahme ergeben sich für die Rückenschale zwei Befestigungspunkte, nämlich der Lagerung des unteren Endes der Rückenschale in den seitlichen Führungen und ferner eine jeweils mit Abstand dazu angeordnete Arretierung, welche in weiterer Ausgestaltung der Erfindung auch in verschiedenen Positionen festlegbar ist. Nach Aufhebung der Arretierung läßt sich die Rückenschale entlang der Rollenlagerung im Haltegestell verschieben.

Die Arretiervorrichtung ist vorzugsweise als ein mittels Hebelarm betätigbarer federbelasteter Rastbolzen ausgebildet, der in eine Rastausnehmung eines seitlichen Schenkel des Haltegestells eingreift. Vorzugsweise ist an beiden Seiten des Sitzes je ein Rastbolzen angeordnet, welche über eine Hebelanordnung gleichzeitig betätigbar sind.

Der Rastbolzen kann sowohl die Funktion der Verrastung einnehmen als auch gleichzeitig eine Führungsfunktion übernehmen, wenn der Rastbolzen einen axialen Bereich größeren Durchmessers zum Eingreifen in die Rastausnehmung eines seitlichen Schenkels des Haltegestells sowie einen axialen Bereich kleineren Durchmessers aufweist, der in einem Führungsspalt des seitlichen Schenkels des Haltegestells verschiebbar ist, wobei die Breite des Führungsspalts schmaler ist als der Durchmesser der Rastausnehmung und die Rastausnehmung und der Führungsspalt ineinander übergehen. Wenn der Rastbolzen mit seinem Bereich größeren Durchmessers daher aus der Rastausnehmung herausgedrückt wird, ist die Rastfunktion aufgehoben und die Rückenschale kann gegenüber dem Haltegestell verschoben werden. Da jedoch der Rastbolzen mit seinem Bereich kleineren Durchmessers in dem an die Rastausnehmung anschließenden Führungsspalt verbleibt, kann sich die Rückenschale nur entsprechend dem Verlauf des Führungsspalts in Verbindung mit der Führung durch die Rollenlagerung bewegen, so daß die Bewegung der Rückenschale bezüglich des Haltegestells zwangsgeführt ist. Wenn entlang des Führungsspalts mehrere Rastpositionen mit Rastausnehmungen vorgesehen sind, kann der Rastbolzen mit seinem größeren Durchmesser an den jeweiligen Rastpositionen jeweils in die Rasteinnehmung eingreifen, so daß sich verschiedene feste Stellungen der Rückenschale erreichen lassen. Insbesondere sind an beiden Enden des Führungsspalts jeweils Rastausnehmungen vorgesehen, so daß die Rückenschale in der ersten Stellung des Rastbolzens am hinteren Ende des Führungsspalts die normale Gebrauchsposition einnimmt und in der zweiten Stellung am vorderen Ende des Führungsspalts die voll in das Haltegestell eingeschobene Stellung einnimmt, in der der Kindersitz transportabel ist und kompakt verstaut werden kann. Vorzugsweise verlaufen der Führungsspalt und die Führungen in den seitlichen Schenkeln im wesentlichen parallel zueinander und zur Ebene der Bodenplatte des Haltegestells. Der Kindersitz kann daher schubladenartig im Haltegestell verschoben werden.

Die Sitzschale ist gegenüber der Rückenschale vorzugsweise arretierend einstellbar, wobei durch mehrere Rastpositionen unterschiedliche Sitzwinkel zwischen Rückenschale und Sitzschale erreichbar sind.

Um den Kindersitz auch für etwas größere Kinder verwenden zu können, ist die Sitzschale vorzugsweise zweigeteilt ausgebildet, wobei ein Sitzteil am unteren Ende der Rückenschale und am vorderen Ende des Sitzteils ein Stützteil gelenkig angeordnet ist. Das Gelenk zwischen Sitzteil und Stützteil ist inbesondere in mehrere Raststellungen einstellbar, so daß die Unterschenkel und Füße des Kindes eine bequeme Position einnehmen können. Bei größeren Kindern hat es sich bewährt, den Kindersitz in Flugrichtung zu befestigen, während für Kleinkinder eine Anordnung entgegen der Flugrichtung bevorzugt wird.

In weiterer Ausgestaltung der Erfindung kann vorgesehen sein, daß an der Vorderkante der Sitzschale oder auch an einer Seitenkante eine gelenkig mit der Sitzschale verbundene Ablageplatte angeordnet ist, die als Spieltisch für Kleinkinder verwendbar ist. Diese Platte kann im zusammengeklappten Zustand des Kindersitzes in Richtung der Sitzschale verlaufen, ohne daß sie einen zusätzlichen Platz beim Verstauen des Kindersitzes einnimmt.

Die Sicherung des Kindes im Kindersitz erfolgt vorzugsweise mittels eines 5-Punkt-Gurtes.

Die Erfindung wird nachstehend anhand eines Ausführungsbeispiels näher erläutert. Es zeigen:
- Fig. 1: ein grundsätzliches Prinzip der Anordnung eines erfindungsgemäßen Kindersitzes,
- Fig. 2: einen Kindersitz mit ebener Sitzschale in Seitenansicht,
- Fig. 3: einen Kindersitz nach Fig. 2 in Perspektivansicht,
- Fig. 4: einen Kindersitz mit abgewinkelter Sitzschale in Seitenansicht,
- Fig. 5: einen Kindersitz nach Fig. 4 in Perspektivansicht,
- Fig. 6: ein Haltegestell in Perspektivansicht,
- Fig. 7: die Rückseite einer Rückenschale,
- Fig. 8: einen Beschlag zwischen Rückenschale und Sitzschale,
- Fig. 9: eine geteilte Sitzschale in ebener Stellung,
- Fig. 10: eine geteilte Sitzschale in abgewinkelter Stellung, und
- Fig. 11: einen Kindersitz mit eingesetzten Polstern.

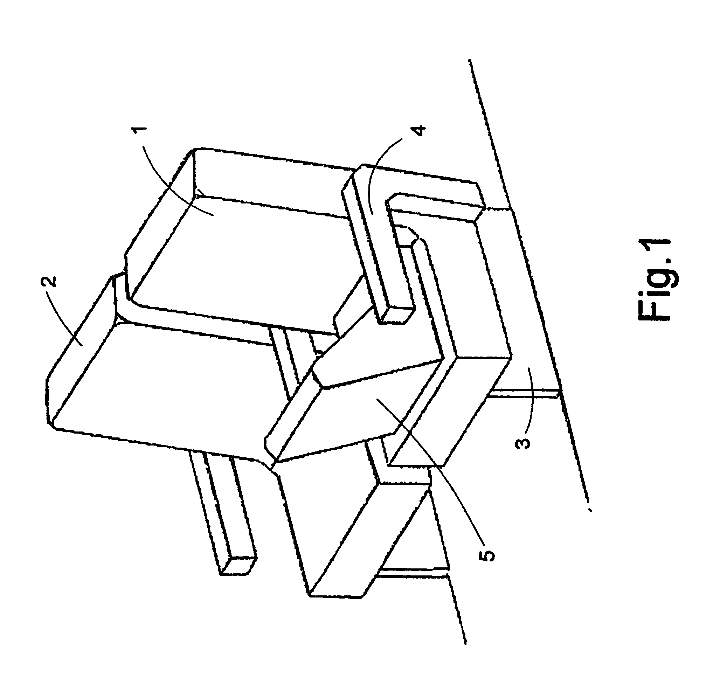

In Fig. 1 sind zwei Fluggastsitze 1, 2 dargestellt, die am Kabinenboden des Flugzeuges mittels Bodenschienen 3 befestigt sind. Die Sitze weisen jeweils Seitenlehnen 4 auf, wobei mittels der üblichen Sitzgurte zwischen den Lehnen 4 ein Kindersitz 5 auf dem Sitz 1 befestigt ist. Die Figur zeigt, daß der Kindersitz entgegengesetzt zur Flugrichtung angeordnet ist, was eine erhöhte Sicherheit insbesondere für Kleinkinder gewährleistet.

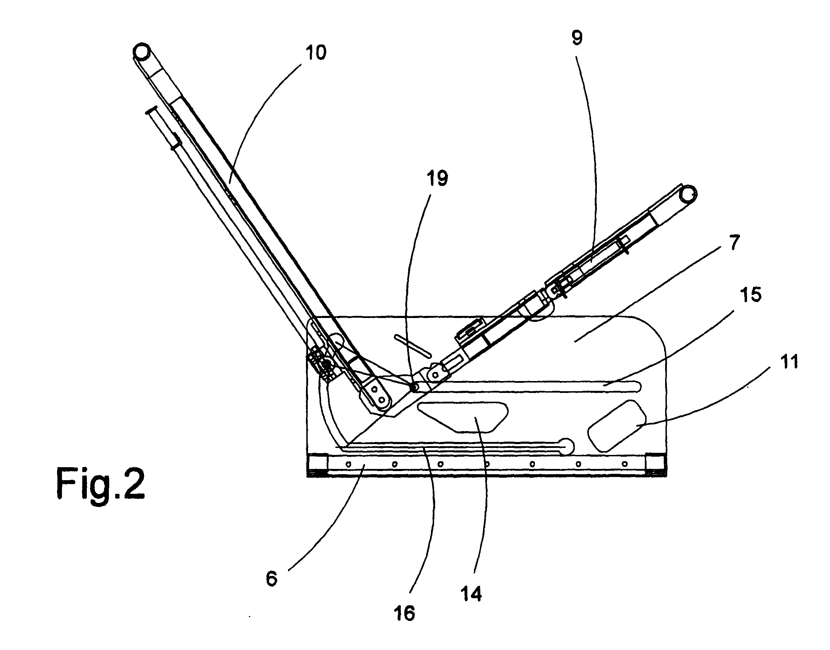

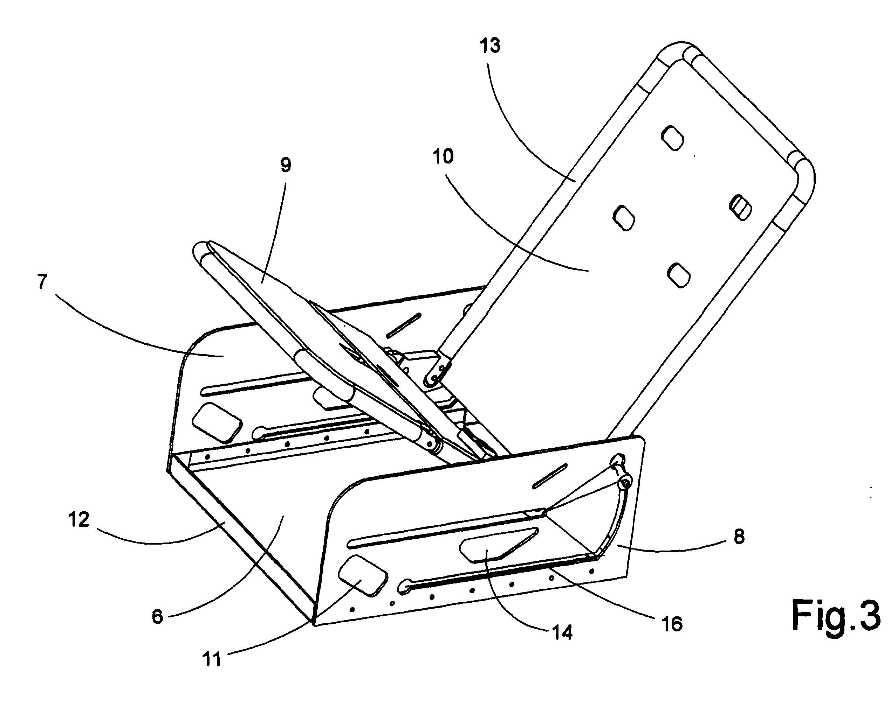

Die Figuren 2 und 3 zeigen einen Kindersitz mit ebener Sitzschale in Seitenansicht. Es ist ein Haltegestell mit einer Bodenplatte 6 und zwei aufragenden Seitenschenkeln 7, 8 vorgesehen, wobei das Haltegestell unmittelbar auf das Sitzpolster eines Fahrgastsitzes aufgesetzt werden kann. Die Bodenplatte 6 ist von einem Rahmen 12 umgeben. Ggf. kann auch der Rahmen 12 ohne Bodenplatte 6 verwendet werden. Die Befestigung des Kindersitzes an dem Fluggastsitz erfolgt mittels des Personengurtes des Fluggastsitzes, der durch die Gurtdurchführung 11 in den Seitenschenkeln 7, 8 hindurchgeführt werden kann. Um zu vermeiden, daß der Gurt beim Hindurchführen durch die Gurtdurchführungen 11 und deren Kanten beschädigt wird, können die Ränder der Gurtdurchführungen 11 abgerundete Verstärkungen aufweisen. Ferner kann der Gurt noch über eine federnde oder gepolsterte Umlenkung geführt werden, um den Gurt ständig unter Spannung zu halten, so daß eine Bewegung des Kindersitzes auf dem Fluggastsitz weitgehend verhindert wird.

In der in den Figuren 2 und 3 gezeigten Darstellung wird der Kindersitz entgegen der Flugrichtung auf dem Fluggastsitz befestigt. Daher wird der Fluggastgurt durch die Gurtdurchführungen 11 geführt. Wenn der Kindersitz in Flugrichtung auf dem Fluggastsitz aufgesetzt wird, werden die Gurtdurchführungen 14 in den Seitenschenkeln 7, 8 verwendet, die entsprechend den Gurtdurchführungen 11 ausgebildet sind.

Am hinteren Ende des Haltegestells ist die Rückenschale 10 befestigt, indem ein an den unteren Enden der Rückenschale 10 befestigter Beschlag über seitliche Gelenke 19 an den Seitenschenkeln 7, 8 des Haltegestells befestigt ist. Die Gelenke 19 sind als Rollenlager ausgebildet und können in Führungen 15 der Seitenschenkel 7, 8 vor- und zurückbewegt werden.

Am unteren Ende der Rückenschale 10 ist die Sitzschale 9 gelenkig befestigt. Sowohl Rückenschale 10 als auch Sitzschale 9 sind jeweils durch ein Rohrgestell 13 gebildet, in das eine anatomisch paßgerecht ausgebildete Sitz- bzw. Rückenschale aus Kunststoff oder textilem Material eingesetzt ist.

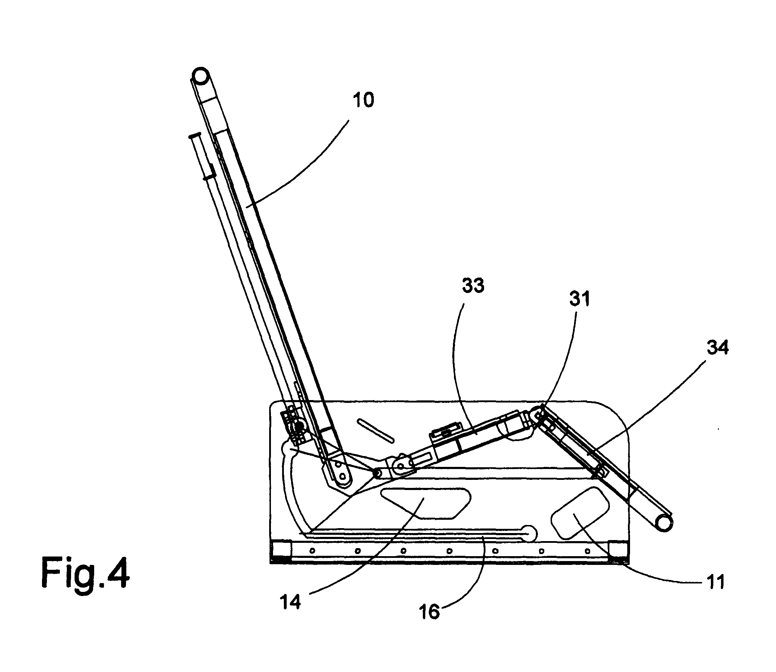

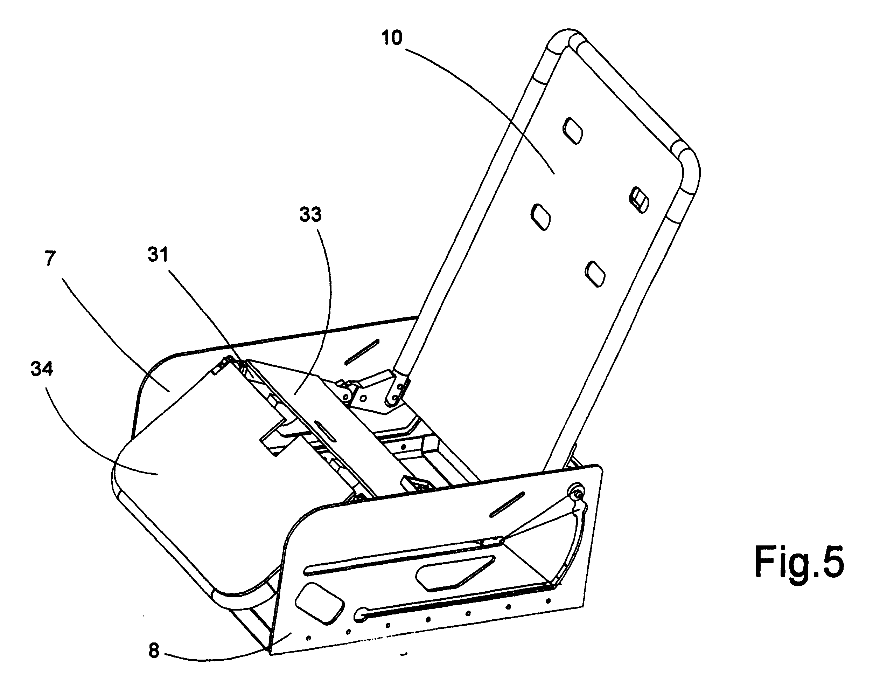

Die Figuren 4 und 5 zeigen einen Kindersitz mit abgewinkelter Sitzschale, der in dieser Stellung in Flugrichtung auf einen Fluggastsitz aufgesetzt wird. Die Sitzschale 9 wird durch ein Sitzteil 33 und ein Stützteil 34 gebildet, welche über ein Gelenk 31 miteinander verbunden sind. Dadurch kann ein größeres Kind bequemer im Kindersitz Platz nehmen. Durch die Anordnung in Flugrichtung und die abgewinkelte Stellung der Sitzschale 9 ist auch der Platzbedarf für das Kind und den Kindersitz geringer als bei einer Aufstellung gemäß den Figuren 2 und 3.

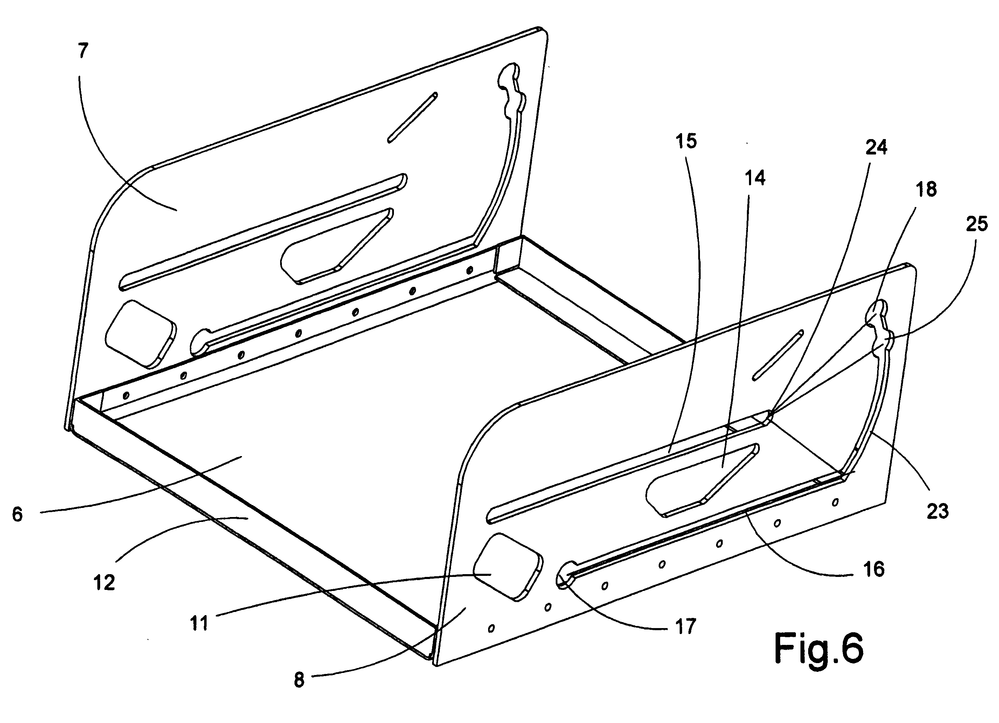

Fig. 6 zeigt ein Haltegestell in perspektivischer Ansicht. An dem Rahmen 12 sind zwei seitliche Seitenschenkel 7, 8 befestigt, welche jeweils zwei parallele im wesentlichen horizontal verlaufende Spalten enthalten. Die obere Spalte ist als Führung 15 ausgebildet, welche das Gelenk 19 (siehe Figuren 2 und 4) aufnimmt. Die untere Spalte ist als Führungsspalt 16 ausgebildet und weist an ihren beiden Enden Rastausnehmungen 17,18 auf. Die Rastausnehmung 18 befindet sich dabei am oberen Ende eines Bogens 23, der vom hinteren Ende des geradlinigen Teils des Führungsspalts 16 im Bogen in Vertikalrichtung geführt ist. Im Bogenbereich 23 ist ferner eine zweite Raststellung 25 vorgesehen, um die Rückenschale in einem anderen Winkel einzustellen. Die obere Raststellung 18 dient zur Einstellung der Rückenschale 10 bei Verwendung des Kindersitzes mit angewinkelter Sitzschale, während die Raststellung 25 Verwendung findet bei Aufbau des Kindersitzes mit gerader Sitzschale 9.

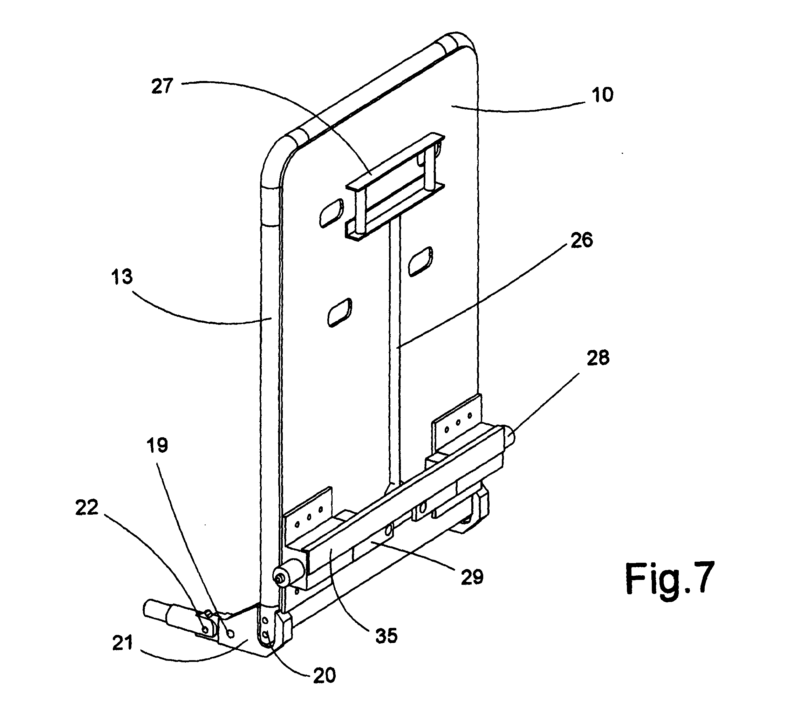

Fig. 7 zeigt die Rückseite einer Rückenschale 10. Die Rückseite weist ein zentral nach oben geführtes Gestänge 26 auf, an dessen oberem Ende sich ein Betätigungsgriff 27 befindet. Das untere Ende des Gestänges 26 ist mit einer Umlenkung 29 verbunden, welche es ermöglicht, eine vertikale Bewegung des Gestänges 26 nach oben in zwei horizontale Bewegungen eines Bolzengestells 35 umzusetzen. Das Bolzengestell weist an seinen äußeren Enden zwei Rastbolzen 28 auf, welche in die Führungen 16 bzw. Bögen 23 eingreifen. Die Rastbolzen weisen einen ersten Bereich größeren Durchmessers auf, der passend in die kreisförmigen Rastausnehmungen 18, 25 und 17 eingreifen kann.

An die Rastausnehmung 18 schließt sich der Bogen 23 an, der eine geringere Breite als der Durchmesser der Rastausnehmung 18 aufweist. Da der Rastbolzen einen zweiten Bereich mit kleinerem Durchmesser aufweist, der geringfügig kleiner als die freie Breite des Führungsspalts 16 bzw. des Bogens 23 ist, kann der Bereich mit kleinerem Durchmesser des Rastbolzens, sobald der Bereich mit größerem Durchmesser des Rastbolzens aus der Rastausnehmung 18 herausgedrückt ist, in dem Bogen 23 bzw. dem Führungsspalt 16 gleitend geführt werden. Während am oberen Ende des Bogens 23 die Rastausnehmung 18 bzw. die Rastausnehmung 25 dazu dient, die Benutzungsstellung der Rückenschale 10 zu verriegeln, dient die Rastausnehmung 17 am vorderen Ende des Führungsspalts 16 dazu, die Rückenschale 10 in in das Haltegestell eingeschobener Stellung in ihrer Endposition zu sichern.

Fig. 7 zeigt auch, daß das untere Ende 20 der Rückenschale 10 mit einem Beschlag 21 verbunden ist, welcher das Gelenk 19 enthält. Am freien Ende des Beschlages 21 befindet sich das Gelenk 22, das die gelenkige Verbindung mit der Sitzschale 9 bildet.

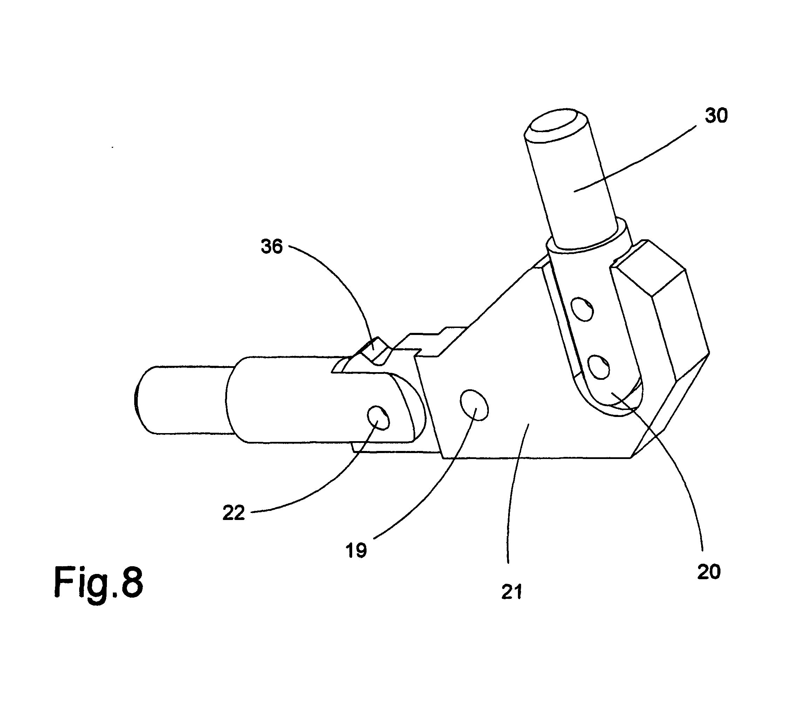

Fig. 8 zeigt den Beschlag 21 noch einmal in vergrößerter Darstellung. Das untere Ende 20 der Rückenschale 10 ist mittels eines Steckbolzens 30 im Rohrgestell 13 der Rückenschale befestigt. Über das Gelenk 22 kann die Sitzschale gegenüber der Rückenschale geklappt werden. Um eine Verriegelungsstellung zwischen Rückenschale und Sitzschale zu erreichen, ist das Gelenk 22 mit einer Rastnut 36 versehen.

Sobald der am unteren Ende der Rückenschale 10 angeordnete Rastbolzen 28 mittels des Betätigungsgriffs 27 über das Gestänge 26 aus den Rastausnehmungen 18 oder 25 gelöst ist, kann der Bereich mit kleinerem Durchmesser des Rastbolzens in dem Bogen 23 nach unten gleiten, so daß die Rückenschale 10 zusammen mit der Sitzschale 9 in eine parallel zur Bodenplatte 6 verlaufende Stellung gebracht werden kann. Da der Führungsspalt 16 und die Führung 15 im Längsbereich des Seitenschenkels 8 parallel zur Bodenplatte 6 verlaufen, kann nach Erreichen der horizontalen Stellung der Rückenschale 10 die Einheit, gebildet aus Rückenschale 10 und Sitzschale 9, zum vorderen Ende des Haltegestells verschoben werden, wobei das Lager 19 in der Führung 15 gleitet, während der Rastbolzen mit seinem kleineren Durchmesser in dem Führungsspalt 16 gleitet, bis der Rastbolzen die Rastausnehmung 17 erreicht hat, in der der Rastbolzen mit seinem Bereich größeren Durchmessers in die Rastausnehmung 17 eingreift, so daß sich erneut eine arretierende Stellung ergibt.

Die Sitzschale kann dann über das Gelenk 22 auf die liegende Rückenschale geklappt werden, so daß sich insgesamt eine sehr kompakte Einheit ergibt, die platzsparend verstaut werden kann.

Die Führung 15, der Führungsspalt 16 und der Bogen 23 sind als Ausnehmungen bzw. Durchbrüche der Seitenschenkel 7 bzw. 8 des Haltegestells ausgebildet und werden beispielsweise durch Wasserstrahlfräsung aus einer Aluminiumplatte hergestellt. Da der Bogen 23, der zwischen der Rastausnehmung 18 und dem geradlinigen Teil des Führungsspalts 16 verläuft, entsprechend einem Abschnitt eines Kreisumfangs mit dem Mittelpunkt am Drehpunkt 24, an dem sich in der Gebrauchsstellung das Gelenk 19 befindet, ausgebildet ist, läßt sich die Rückenschale 10 bei Lösen des Rastbolzens aus der Rastausnehmung herunterklappen, ohne daß das Gelenk 19 sich zunächst aus dem Drehpunkt 24 entfernt. Erst wenn die Rückenschale vollständig heruntergeklappt ist, kann der Rastbolzen mit seinem kleineren Durchmesser parallel zur Führung 15 verschoben werden.

Die Erfindung deckt hierbei auch andere Verläufe des Führungsspalts 16. Insbesondere kann auch vorgesehen sein, daß entlang des Bogens 23 noch weitere Rastausnehmungen angeordnet sind, so daß die Rückenschale in einer Reihe von Stellungen verriegelbar ist.

Führungsspalt 16 und/oder die Führungen 15 können auch durch an dem Haltegestell befestigte Schienen gebildet sein, womit eine Spaltbildung in den Schenkeln des Haltegestells vermeidbar ist. Dies erhöht die Festigkeit des Haltegestells.

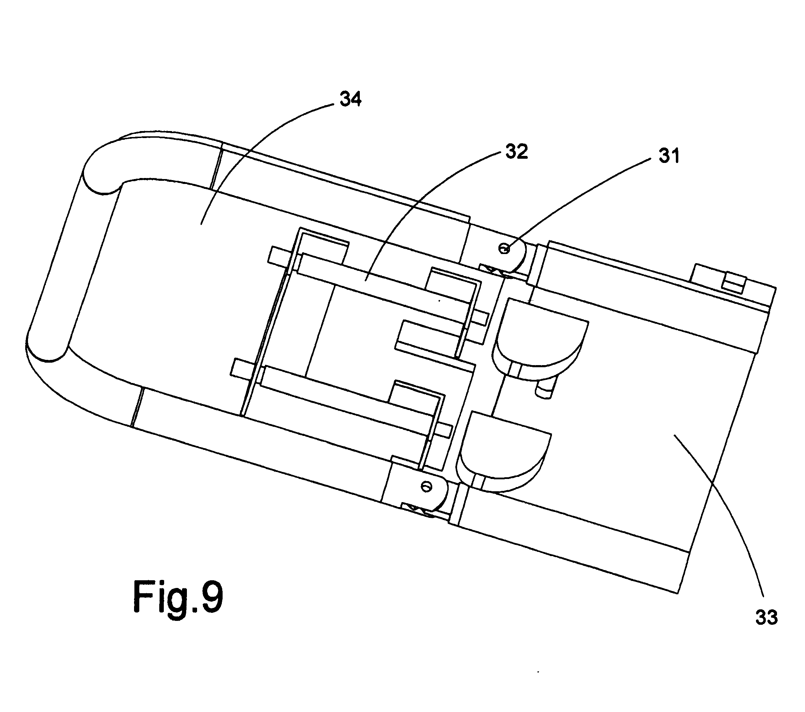

Fig. 9 zeigt eine Sitzschale 9 in ebener Stellung. Das Sitzteil 33 und das Stützteil 34 sind mittels eines Gelenks 31 miteinander verbunden. Unterhalb des Stützteils 34 befindet sich ein Rastgestänge 32, das der Einstellung des Stützteils 34 gegenüber dem Sitzteil 33 dient.

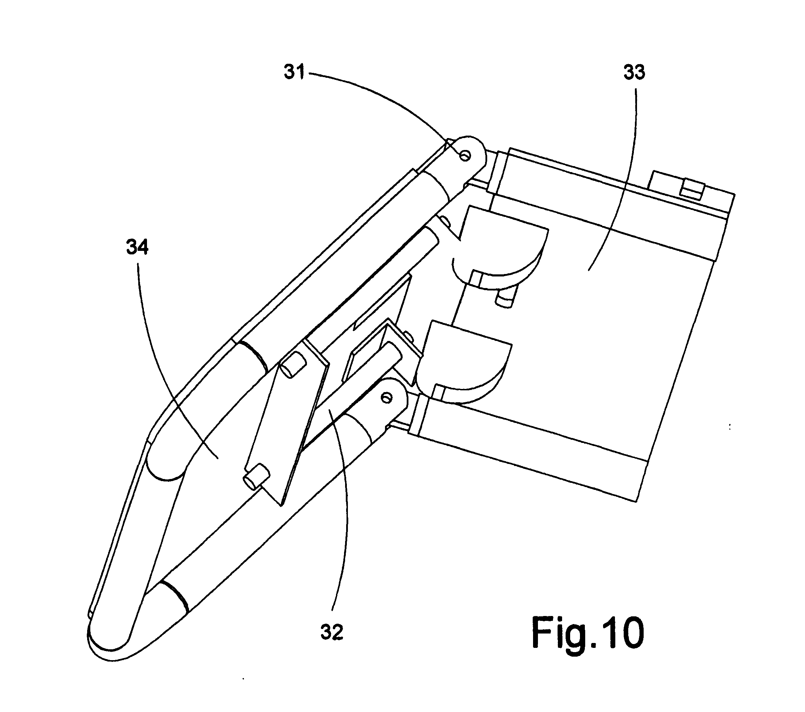

Fig. 10 zeigt das Sitzteil in abgewinkelter Ansicht, wobei das Sitzteil 33 und das Stützteil 34 im Winkel zueinander angeordnet sind. Die Winkelstellung kann in zwei oder mehr Stellungen eingestellt werden, beispielsweise durch eine Kugelrastung im Gelenk 31. Durch das Rastgestänge 32 können jedoch auch feste Raststellungen eingestellt werden.

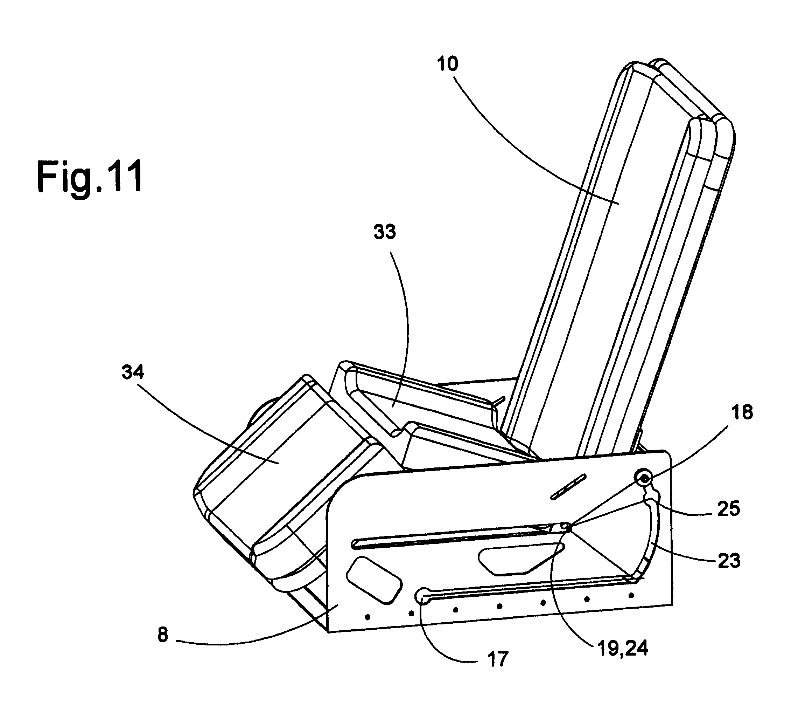

Fig. 11 zeigt schließlich den Kindersitz mit abgewinkelter Sitzschale, wobei die Figur deutlich die Anordnung der Polster in der Sitzschale und der Rückenschale zeigt.

Der Kindersitz nach der Erfindung ist universell verwendbar. Für Kleinkinder eignet sich insbesondere der Aufbau des Kindersitzes mit ebener Anordnung, wobei der Kindersitz gegen die Flugrichtung auf einem Fahrgastsitz befestigt wird.

Für größere Kinder eignet sich die Anordnung des Kindersitzes in Flugrichtung, wobei die Sitzschale abgewinkelt wird. Damit ergibt sich eine besonders bequeme Stellung für das Kind und die Anordnung hat den Vorteil, das der Platzbedarf auf dem Fluggastsitz erheblich geringer ist als in der Stellung des Kindersitzes gegen die Flugrichtung.

Grundsätzlich kann der erfindungsgemäße Kindersitz auch in anderen Fahrzeugen, wie z. B. PKW's, Bussen und dergleichen verwendet werden.

### Bezugszeichenliste

- 1: Fluggastsitz
- 2: Fluggastsitz
- 3: Bodenschiene
- 4: Seitenlehne
- 5: Kindersitz
- 6: Bodenplatte
- 7: Seitenschenkel
- 8: Seitenschenkel
- 9: Sitzschale
- 10: Rückenschale
- 11: Gurtdurchführung
- 12: Rahmen
- 13: Rohrgestell
- 14: Gurtdurchführung
- 15: Gurtdurchführung
- 16: Führungsspalt
- 17: Rastausnehmung
- 18: Rastausnehmung
- 19: Gelenk
- 20: unteres Ende
- 21: Beschlag
- 22: Gelenk
- 23: Bogen
- 24: Drehpunkt
- 25: Rastausnehmung
- 26: Gestänge
- 27: Betätigungsgriff
- 28: Rastbolzen
- 29: Umlenkung
- 30: Steckbolzen
- 31: Gelenk
- 32: Rastgestänge
- 33: Sitzteil
- 34: Stützteil
- 35: Bolzengestell
- 36: Rastnut

## Patentansprüche

1. Kindersitz, insbesondere zur mobilen Verwendung in einem Flugzeug, mit einem auf einem Fahr- oder Fluggastsitz (1, 2) mittels Gurt befestigbaren Haltegestell, an dem eine Sitzschale (9) und eine Rückenschale (10) gelenkig befestigt sind, wobei dem Haltegestell eine Arretiervorrichtung zur Einstellung des Kindersitzes in einer bestimmten Sitzposition zugeordnet ist, **dadurch gekennzeichnet, daß** die seitlichen unteren Enden der Rückenschale (10) in seitlichen Führungen (15) des Haltegestells verschieblich gelagert sind, daß die Rückenschale (10) in einer aufgerichteten Position mit Hilfe der Arretiervorrichtung bezüglich des Haltegestells feststellbar ist, wobei nach Lösen der Arretiervorrichtung die Rückenschale (10) in den Führungen (15) des Haltegestells verschieblich ist und die am unteren Ende der Rückenschale (10) angelenkte Sitzschale (9) gegen die Rückenschale (10) klappbar ist.

2. Kindersitz nach Anspruch 1, **dadurch gekennzeichnet, daß** das Haltegestell im Querschnitt U-förmig mit seitlich aufragenden Schenkeln (7, 8) ausgebildet ist, und daß die Führungen (15) in den seitlichen Schenkeln (7, 8) verlaufen.

3. Kindersitz nach Anspruch 2, **dadurch gekennzeichnet, daß** die Führungen (15) durch parallel zur Bodenfläche (6) des Haltegestells verlaufende spaltartige Ausnehmungen der seitlichen Schenkel (7, 8) des Haltegestells gebildet sind.

4. Kindersitz nach Anspruch 3, **dadurch gekennzeichnet, daß** die unteren Enden der Rückenschale (10) durch eine Rollenlagerung (19) in den spaltartigen Führungen (15) des Haltegestells geführt sind.

5. Kindersitz nach Anspruch 2, **dadurch gekennzeichnet, daß** die Arretiervorrichtung der Rückenschale (10) so ausgebildet ist, daß sie in der Arretierstellung der Rückenschale (10) in eine Rastausnehmung (18) in wenigstens einen der seitlichen Schenkel (7, 8) des Haltegestells eingreift, wobei die Eingreifposition der Arretiervorrichtung mit Abstand zur Lagerung (19) der Rückenschale (10) im Haltegestell angeordnet ist.

6. Kindersitz nach Anspruch 5, **dadurch gekennzeichnet, daß** die Arretiervorrichtung als ein mittels Hebelarm betätigbarer federbelasteter Rastbolzen ausgebildet ist, der in eine Rastausnehmung (17, 18) eines seitlichen Schenkel eines Haltegestells eingreift,

7. Kindersitz nach Anspruch 5 oder 6, **dadurch gekennzeichnet, daß** das Haltegestell mehrere Eingreifpositionen (17, 18) der Arretiervorrichtung aufweist.

8. Kindersitz nach Anspruch 6 oder 7, **dadurch gekennzeichnet, daß** der Rastbolzen einen axialen Bereich größeren Durchmessers zum Eingreifen in eine Rastausnehmung (17, 18) eines seitlichen Schenkels (7, 8) des Haltegestells und einen axialen Bereich kleineren Durchmessers aufweist, der in einem Führungsspalt (16) eines seitlichen Schenkels des Haltegestells verschieblich ist, wobei die Breite des Führungsspalts (16) schmaler ist als der Durchmesser der Rastausnehmung (17, 18), und daß die Rastausnehmung (17, 18) und der Führungsspalt (16) ineinander übergehen.

9. Kindersitz nach Anspruch 7 oder 8, **dadurch gekennzeichnet, daß** der Führungsspalt (16) wenigstens an seinen beiden Enden eine Rastausnehmung (17, 18) aufweist.

10. Kindersitz nach Anspruch 8 oder 9, **dadurch gekennzeichnet, daß** der Führungsspalt (16) und die Führungen (15) in einem Teilabschnitt im wesentlichen parallel zueinander und zur Bodenplatte (6) verlaufen.

11. Kindersitz nach einem oder mehreren der vorhergehenden Ansprüchen, **dadurch gekennzeichnet, daß** die Sitzschale zweiteilig ausgebildet ist, wobei ein Sitzteil (33) am unteren Ende der Rückenschale angelenkt ist und ein Stützteil (34) an der freien Vorderkante des Sitzteils (33) gelenkig befestigt ist.

12. Kindersitz nach Anspruch 11, **dadurch gekennzeichnet, daß** das Gelenk (31) zwischen Sitzteil (33) und Stützteil (34) in wenigstens zwei Stellungen einstellbar ist.

13. Kindersitz nach Anspruch 12, **dadurch gekennzeichnet, daß** zwischen Sitzteil (33) und Stützteil (34) eine Rasteinrichtung zur Einstellung des Winkels zwischen Sitzteil und Stützteil vorgesehen ist.

14. Kindersitz nach einem oder mehreren der vorhergehenden Ansprüche, **dadurch gekennzeichnet, daß** die Sitzschale (9) gegenüber der Rückenschale (10) arretierend einstellbar ist.

15. Kindersitz nach Anspruch 14, **dadurch gekennzeichnet, daß** an der Vorderoder Seitenkante der Sitzschale (9) eine gelenkig mit der Sitzschale (9) verbundene Ablageplatte angeordnet ist.

16. Kindersitz nach Anspruch 15, **dadurch gekennzeichnet, daß** im zusammengeklappten Zustand des Kindersitzes Haltegestell, Rückenschale (10), Sitzschale (9) und Ablageplatte im wesentlichen parallel zueinander liegen.

17. Kindersitz nach einem oder mehreren der vorhergehenden Ansprüche, **dadurch gekennzeichnet, daß** ein Fünfpunktgurt zur Sicherung des in dem Kindersitz eingesetzten Kindes vorgesehen ist.

## Claims

1. Child's seat, in particular for mobile use in an aircraft, with a support frame capable of being fixed by means of a belt on a passenger seat (1, 2), on which are fixed in articulated manner a seat pan (9) and a back pan (10), whereby associated to the support frame is a locking means for setting the child's seat in a given seating position, **characterized in that** the lateral lower ends of the back pan (10) are displaceably supported in lateral guide means (15) of the support frame, that the back pan (10) can be fixed in an upright position relative to the support frame with the aid of the locking means, whereby after release of the locking means the back pan (10) is displaceable in the guide means (15) of the support frame, and the seat pan (9) linked at the lower end of back pan (10) can be folded against the back pan (10).

2. Child's seat according to Claim 1, **characterized in that** the support frame is constructed with a U-shaped cross section with laterally projecting arms (7, 8) and that the guide means (15) run in the lateral arms (7, 8).

3. Child's seat according to Claim 2, **characterized in that** the guide means (15) are formed by slot like cutouts of the lateral arms (7, 8) of the support frame, running parallel to the floor surface (6) of the support frame.

4. Child's seat according to Claim 3, **characterized in that** the lower ends of the back pan (10) are guided in the slot like guide means (15) by a roller bearing (19).

5. Child's seat according to Claim 2, **characterized in that** the locking means of the back pan (10) is constructed such that, in the locked position of the back pan (10), it engages in a stop cutout (18) in at least one of the lateral arms (7, 8) of the support frame, whereby the position of engagement of the locking means is disposed at a distance from the bearing (19) of the back pan (10) in the support frame.

6. Child's seat according to Claim 5, **characterized in that** the locking means is constructed as a spring-loaded stop pin capable of being actuated by means of a lever arm, the pin engaging in a stop cutout (17, 18) of a lateral arm of the support frame.

7. Child's seat according to Claim 5 or 6, **characterized in that** the support frame contains several engagement positions (17, 18) of the locking means.

8. Child's seat according to Claim 6 or 7, **characterized in that** the stop pin contains an axial region of larger diameter for engaging in a stop cutout (17, 18) of the lateral arm (7, 8) of the support frame, and an axial region of smaller diameter that is displaceable in a guide slot (16) of a lateral arm of the support frame, whereby the width of the guide slot (16) is narrower than the diameter of the stop cutout (17, 18), and that the stop cutouts (17, 18) and the guide slot (16) pass into one another.

9. Child's seat according to Claim 7 or 8, **characterized in that** the guide slot (16) contains, at least at both its ends, a stop cutout (17, 18).

10. Child's seat according to Claim 8 or 9, **characterized in that** the guide slot (16) and the guide means (15) run, over a partial section, essentially parallel to each other and to the floor plate (6).

11. Child's seat according to one or several of the preceding claims, **characterized in that** the seat pan is constructed in two pieces, whereby a seat part (33) is linked to the lower end of the back pan and a support part is fixed at the free front edge of the seat part (33).

12. Child's seat according to Claim 11, **characterized in that** the link (31) between seat part (33) and the support part (34) can be set in at least two positions.

13. Child's seat according to Claim 12, **characterized in that** between seat part (33) and support part (34) a stop contrivance is provided for setting the angle between seat part and support part.

14. Child's seat according to one or several of the preceding claims, **characterized in that** the seat pan (9) is adjustable in a lockable way relative to the back pan (10).

15. Child's seat according to Claim 14, **characterized in that** on the front or lateral edge of the seat pan (9) a panel is arranged joined in articulated manner with the seat pan (9).

16. Child's seat according to Claim 15, **characterized in that** in the folded condition of the child's seat the support frame, the back pan (10), seat pan (9) and the panel run essentially parallel to each other.

17. Child's seat according to one or several of the preceding claims, **characterized in that** a five-point belt is provided for securing the child placed in the child's seat.

## Revendications

1. Siège pour enfant, en particulier pour une utilisation mobile dans un avion, avec un cadre de support qui est apte à être fixé sur un siège d'automobile ou d'avion (1, 2) à l'aide d'une ceinture et auquel une coque d'assise (9) et une coque de dossier (10) sont fixées de manière articulée, un dispositif de blocage étant associé à ce cadre de support pour régler le siège pour enfant dans une position assise définie, **caractérisé en ce que** les extrémités inférieures latérales de la coque de dossier (10) sont montées mobiles dans des guides latéraux (15) du cadre de support et **en ce que** la coque de dossier (10) est apte à être bloquée par rapport au cadre de support dans une position redressée, à l'aide du dispositif de blocage, étant précisé qu'après le déblocage du dispositif de blocage, la coque de dossier (10) est mobile dans les guides (15) du cadre de support et que la coque d'assise (9) articulée à l'extrémité inférieure de la coque de dossier (10) est apte à être rabattue contre cette dernière.

2. Siège pour enfant selon la revendication 1, **caractérisé en ce que** le cadre de support a une section transversale en U, avec des branches saillant latéralement (7, 8), et **en ce que** les guides (15) s'étendent dans les branches latérales (7, 8).

3. Siège pour enfant selon la revendication 2, **caractérisé en ce que** les guides (15) sont définis par des creux en forme de fentes, parallèles à la surface inférieure (6) du cadre de support, qui sont prévus dans les branches latérales (7, 8) du cadre de support.

4. Siège pour enfant selon la revendication 3, **caractérisé en ce que** les extrémités inférieures de la coque de dossier (10) sont guidées dans les guides en forme de fentes (15) du cadre de support grâce à un roulement à rouleaux (19).

5. Siège pour enfant selon la revendication 2, **caractérisé en ce que** le dispositif de blocage de la coque de dossier (10) est conçu pour pénétrer, dans la position d'arrêt de la coque de dossier (10), dans un creux d'enclenchement (18) prévu dans l'une au moins des branches latérales (7, 8) du cadre de support, la position d'enclenchement du dispositif de blocage étant prévue à une certaine distance du roulement (19) de la coque de dossier (10), dans le cadre de support.

6. Siège pour enfant selon la revendication 5, **caractérisé en ce que** le dispositif de blocage est conçu comme un boulon d'arrêt, contraint par ressort et apte à être actionné à l'aide d'un bras de levier, qui pénètre dans un creux d'enclenchement (17, 18) d'une branche latérale d'un cadre de support.

7. Siège pour enfant selon la revendication 5 ou 6, **caractérisé en ce que** le cadre de support présente plusieurs positions d'enclenchement (17, 18) du dispositif de blocage.

8. Siège pour enfant selon la revendication 6 ou 7, **caractérisé en ce que** le boulon d'arrêt présente une zone axiale de plus grand diamètre pour pénétrer dans un creux d'enclenchement (17, 18) d'une branche latérale (7, 8) du cadre de support, et une zone axiale de plus petit diamètre qui est mobile dans une fente de guidage (16) d'une branche latérale du cadre de support, la largeur de la fente de guidage (16) étant inférieure au diamètre du creux d'enclenchement (17, 18), et **en ce que** le creux d'enclenchement (17, 18) et la fente de guidage (16) se prolongent mutuellement.

9. Siège pour enfant selon la revendication 7 ou 8, **caractérisé en ce que** la fente de guidage (16) présente au moins à ses deux extrémités un creux d'enclenchement (17, 18).

10. Siège pour enfant selon la revendication 8 ou 9, **caractérisé en ce que** la fente de guidage (16) et les guides (15), dans un tronçon partiel, sont sensiblement parallèles l'une par rapport à l'autre et par rapport à la plaque inférieure (6).

11. Siège pour enfant selon l'une au moins des revendications précédentes, **caractérisé en ce que** la coque d'assise est en deux parties, une partie d'assise (33) étant articulée à l'extrémité inférieure de la coque de dossier, et une partie d'appui (34) étant fixée de manière articulée au bord avant libre de la partie d'assise (33).

12. Siège pour enfant selon la revendication 11, **caractérisé en ce que** l'articulation (31) entre la partie d'assise (33) et la partie d'appui (34) est réglable dans au moins deux positions.

13. Siège pour enfant selon la revendication 12, **caractérisé en ce qu'**il est prévu un dispositif d'enclenchement entre la partie d'assise (33) et la partie d'appui (34), pour régler l'angle entre ladite partie d'assise et ladite partie d'appui.

14. Siège pour enfant selon l'une au moins des revendications précédentes, **caractérisé en ce que** la coque d'assise (9) est réglable pour être bloquée par rapport à la coque de dossier (10).

15. Siège pour enfant selon la revendication 14, **caractérisé en ce en ce qu'**une tablette reliée de manière articulée à la coque d'assise (9) est disposée sur le bord avant ou latéral de celle-ci.

16. Siège pour enfant selon la revendication 15, **caractérisé en ce que** dans la position repliée du siège pour enfant, le cadre de support, la coque de dossier (10), la coque d'assise (9) et la tablette sont sensiblement parallèles.

17. Siège pour enfant selon l'une au moins des revendications précédentes, **caractérisé en ce qu'**une ceinture cinq points est prévue pour protéger l'enfant placé dans le siège pour enfant.
